# EUROPEAN PATENT APPLICATION

(11) **EP 1 110 441 A1**
(43) Date of publication of application: **27.06.2001**
(21) Application number: 99830801.9
(22) Date of filing: 24.12.1999
(51) Int. Cl.: A01D 34/416

(54) **Operative head for the cut of the grass and the bushes**

(71) Applicant: Pompamea Giuseppe, 84100 Salerno (IT)
(72) Inventor: Pompamea Giuseppe, 84100 Salerno (IT)

(57) **Abstract**

The invention concerns a rotating head that doesn't need any additional attaching elements for the cord blades (7) and, where these same cutting elements can also function as holding elements for another additional cutting element, that is a rigid piece shaped as a blade (11), that can be contemporaneously used to produce a tool which is a rotating head with a double and contemporary cutting possibility both with cord blades and with flat rigid blades, that havs a great adaptability for grassy lands and woody ones, both flat and bumpy.

The cylindric supporting body has in the under part a portion having a circular form (8) which forms a base that circumscribes the other concave square portion (9) the cutting part with rigid blades (11) has a central hole (13) coaxially inserted on said square portion (9) attached to this by means, of the nylon cord blades (7) rightly inserted in the holes (6) and perpendicularly to the axle of the motor, and by means of the semispheric protrusions (14).

## Description

### Technical field

The here under described has as subject a special removable rotating head, fixed by mechanical means to the end of an axle of a portable cutter with electric or explosion motor, to cut lawns and shrubs.

### Technique

The use of motorized lawn and shrub cutters is widely spread, there are in fact many different types, which use different types of rotating heads to cut lawns and shrubs.

It is well known that the above mentioned rotating heads to cut lawn and shrubs are not free of inconveniences and aren't easy to assemble or disassemble and present furthermore a great complexity due to the great number of pieces with which they are built and that weigh both on their cost and reliability.

Easyness of use and cost reductions assume in the above mentioned a great importance above all as an attraction for the customer, therefore a commercial value that justifies the costant search of solutions relative to the perfectioning of the existing techniques.

### Advantages and characteristics of the invention

The scope of this new tool is then to invent, a rotating head for portable lawn and shrub cutters than can, with extremely easy means, better the functional characteristics on the existing cutters adding at the same time new and unknown techniques.

It is a further goal of this invention to obtain a rotating head that can be applied to most lawn and shrub cutters, which heaven easy and secure operating principle, are light and strong, are built with materials easy to find and can be manufactured at a low cost so that the industrial production is advantageous and its final cost very low.

It is then the main scope of this invention to produce a monolithic rotating head where no additional fixing elements are necessary for the cord and blades and, where these cutting elements can also function as holding elements of another additional cutting element, that is a rigid flat plane in the form of blade, that can be contemporarely used, to produce a tool specifically a rotating head with a double and contemporary possibility of cutting both with cords and blades and with rigid flat blades, which can function both on grass lands and woody ones, both flat and bumpy.

### Description of drawings and production method of the invention.

The invention is illustrated in detail with detailed examples of the preferred production forms purely exemplative, as per enclosed drawings supplied only as indicative purpose and not limitating, where:
Fig. 1: Shows, in a side view, a first form of the preferred production of the present invention and in particular the monolithic rotating head without the cord elements used for the cutting.
Fig. 2: Schematically shows a view from above of a first form of the preferred production of the present invention in particular the monolithic head without the cord elements used for the cutting.
Fig. 3: Schematically shows in a view from above and partially as a section a second form of the preferred production, in particular the monolithic rotating head without the cord elements and rigids used for the cutting.
Fig. 4: Schematically shows a side view of a second form of the preferred production of the present invention in particular the monolithic rotating head without the cord elements and rigids used for the cutting.

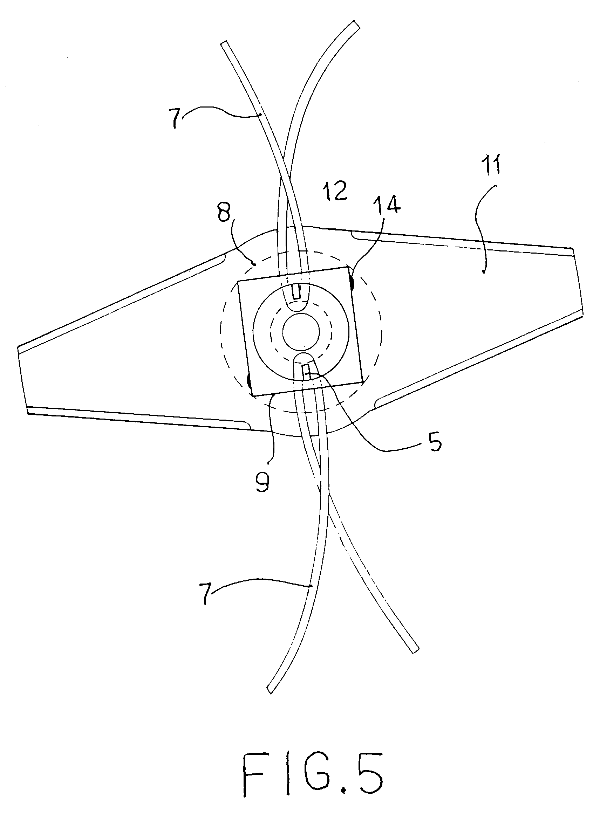

Fig. 5: Schematically shows in a view from above in a production form, the unit of the monolithic rotating head with the cord elements and rigids used for the cutting.

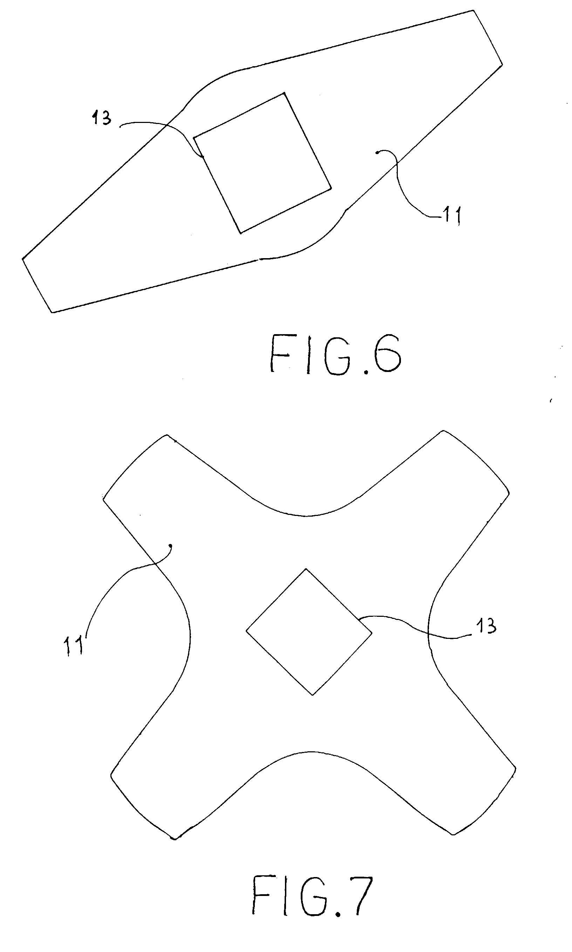

Fig. 6: Schematically shows in a view from above the unit of the rigid cutting element equipped with two blades.
Fig. 7: Schematically shows, in a view from above, the unit of the rigid cutting element equipped with 4 blades.

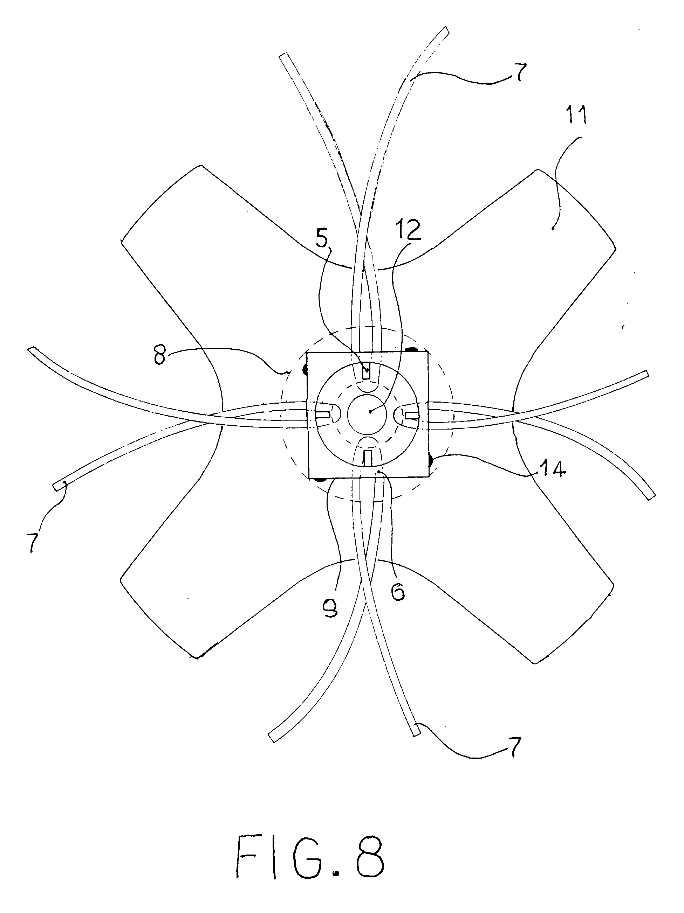

Fig. 8: Schematically shows in a view from above, another form of the preferred production, that is the unit of the monolithic rotating head with the cord cutting elements and rigids used for the cutting.

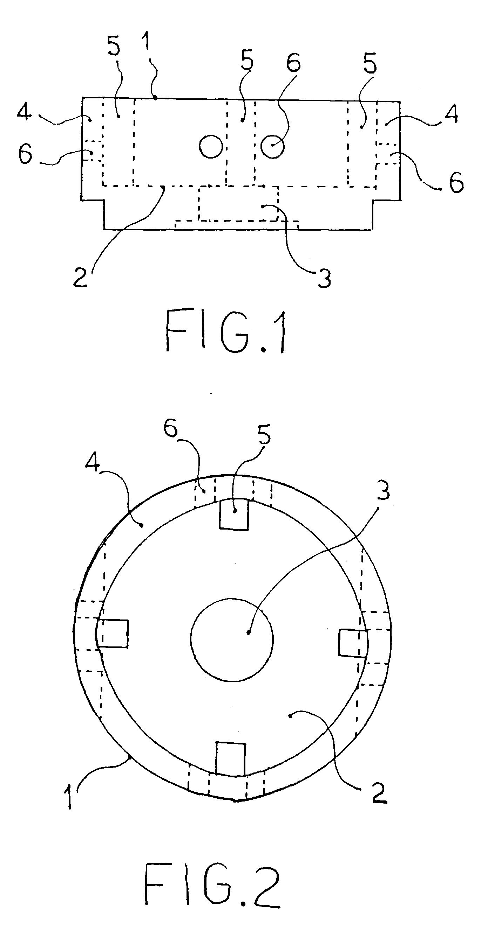

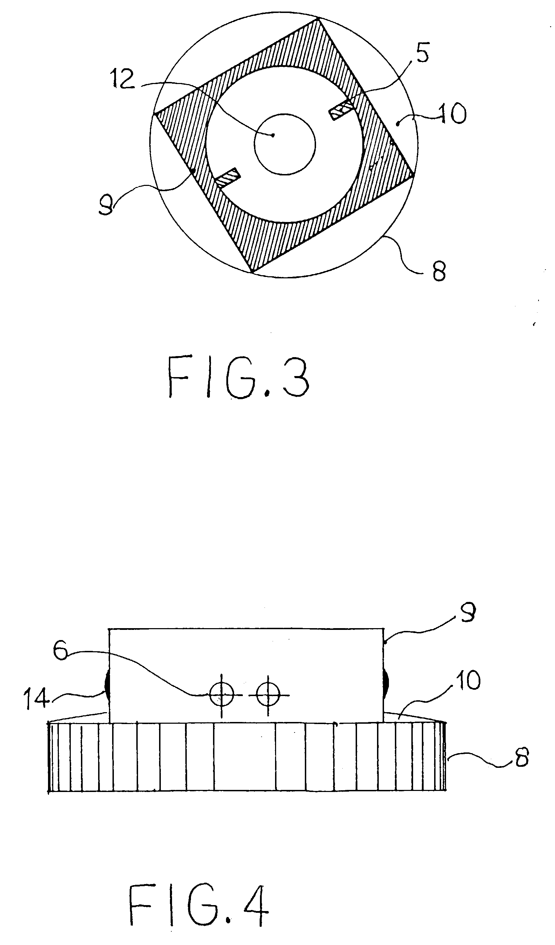

The invention in a first form of the preferred production, as shown in figs. 1 and 2, comprises, a monolithic cylindric body (1) with an horizontal base in a circular form (2) having a central hole (3) to be fixed on the motor axle by means of a coupling screw element and a vertical peripheric wall (4) having on the internal surface, protrusions (5) or spacers, preferably in a rettangular form positioned in a vertical manner.

Said protrusions are peripherically positioned in opposition to each other in two's or four's. On the peripheric wall (4) of the body (1) and on each side of said vertical protrusions (5) there is a radial hole (6), where, by means of a light elastic forcing, one of the two corresponding free ends of the nylon cord (7) and the stable holding of the same can pass. The presence of these protrusions (5) or spacers, allows to hold the nylon cords (7) in a stable position during the operation, diminishing the cause of wear of the cords, consenting thus a fast and easy replacement when worn.

In an other form of the preferred production of the present invention the supporting cylindric body presents in the underpart a circular portion (8) which forms a base that cinconscribes the other concave square portion (9) with the concavity turned up so that the external superior surface (10) of the circular base (8) can be a support element for a cutting unit with rigid blades (11) opportunely shaped, while the peripheric surface of the upper square portion (9) can be an element that can hold in position the above mentioned cutting unit and can be an opposition element to the strain applied to the horizontal plane in such a way to impede the relative rotations between the cutting unit and the position holding element itself.

The portion with a concave square conformation (9) is provided with a central internal hole (12) for the fixing to the motor axle by means of a coupling screw element while on the surface of the internal peripheric wall, there are some vertical protrusions (5) or spacers preferably designed as a cylindric bar with a rettangular form, placed vertically in a potruding manner. Said protrusions are placed in opposition to each other in two's or four's on the peripheric wall of the unit (9) and on each side of said vertical protrusions (5) there is a radial hole (6), where, by a light elastic forcing, can pass one of the two corresponding free ends of the nylon cord (7) and the stable holding of the same can pass.

The cutting unit with the rigid blades (11) has a coaxial central hole (13) placed on said square part (9) and it is fixed on it in such a way as to impede any possibility of removal both during the high velocity rotation and in case of bumping to stones or roots during its rotation by means of the nylon cord blades (7) securely inserted in the holes (6) and perpendicularly placed on the motor axle (14), to advantage the invention opportune semispheric protrusion (6)in two, four or more, have in fact been provided on the external vertical walls of the unit (9) which collaborate to hold the rigid blade (11) in position even in case of a total or partial breakdown of the nylon cord blades.

The advantages derived from this innovation concern the rotating head of the lawn mower, which according to the provisions of this invention can be easily assembled and disassembled, with a simple and economic manufacturing, reliable even after a long functioning period and which allows the contemporary cutting both with cord blades and rigid blades obtaining excellent results in the cutting of grass and shrubs.

The replacement of the cords is very fast, it is enough in fact to insert two or four nylon cords (7), in such a way that two free ends of each cord, can pass through the holes (6) the unit (1) or of the unit itself (9), according to the type, and with the ends of the cord radially protruding from the head in such a manner as to consent the cutting of the grass by means of their rotating around the motor axle.

The replacement of the blades (11) or their transfer can be done without any specific tool and in a few seconds with the maximum semplicity. In fact the unit with the rigid cut with the double blades or the one with the four blades, is inserted by applying a due pressure on the holding semispheric protrusions (14) and is removed with a light traction; in both cases the elastic qualities of the materials used are exploited.

The unit of the rotating head produced with the proper materials preferably plastic resin or light alloy, in the various styles proposed has been studied in such a way as to be easily adapted to motorized electric cutters and to traditional manouvering elements, of any type of lawn mower; the head is fixed with a self screwing threaded screw to the hub of a lawn mower.

The design of this invention is susceptible to many variations within the range of the inventive concept as for the rotating head unit which further than on a square or round base can have a triangular, rettangular exagonal, octagonal, etc... geometric form while the internal spacers (5) could be a multiple of two, as like the nylon cord blades or the rigid ones the cutting unit can be any number, as can vary the materials or the dimentions used according the requirements.

## Claims

1. Monolithic cylindric unit of a rotating head for lawn mowers or shrub cutters characterized by the fact that it doesn't need additional fixing elements for the cord blades (7) and, where these same elements delegated to the cutting can also function as elements to hold in position another additional cutting, element that is a flat rigid unit shaped in a blade form (4), that can be contemporaneously used as a tool and specifically a rotating head with a double and contemporary function to cut both with cord blades and flat rigid blades.

2. Monolithic unit of rotating head as claimed.
1) Characterized by the fact that they are a monolithic cylindric unit (1) with a circular horizontal form (2) having a central hole (3) for its fixing to the axle of the motor by means of a coupling screw element, and a peripheric vertical wall (4) provided with potrusions (5) or spacers standing on the internal surface, preferable in a rettangular form placed peripherically and opposite each other in the number if two or four, and on each side of said vertical potrusions (5) there is a radial hole, where one of the two free ends of the nylon cord (7) and the stable holding of the same passes.

3. Monolithic unit of rotating head as in claim:
1) Characterized by the fact that in the under part it is made by a circular part (8) which forms a base that circunscribes the other concave square part (9) with the concavity turned up so that the external upper surface (10) of the circular base (8) can form a support element for a cutting unit with rigid blades (11) rightly shaped while the peripheric surface of the upper part with a square conformation (9) can be used to hold in position the element of the above mentioned cutting unit and as an opposition element for the stress present in the horizontal plane.

4. Monolithic unit of rotating head as claimed:
1)and 3) characterized by the fact that the concave square part (9) is provided with a central hole (12) to allow the fixing to the axle of the motor by means of a coupling screw element while on the surface of the peripheric internal wall there are some protrusions (5) or spacers preferably built as cylindric bars in a rettangulae form, standing in opposite position to each other in the number of two or four and on each side of said vertcal protrusions (5) there is a radial hole (6), where one of the two free ends of the nylon cord (7) and the stable holding of the same pass.

5. Monolithic unit of a rotating head as claim 1), 2), 3) and 4) characterized by the fact that the cutting unit with rigid blades (11) has a central hole (13) that is coaxially inserted on said square part (9), and is jointed to the same, by the nylon cord blades (7) rightly inserted in holes (6) and perpendicularly placed on the axle of the motor, and by opportune semispheric protrusions (14);

6. Monolithic unit of rotating head as preceeding claims characterized by the fact that the semispheric potruding elements (14) in the number of two or four or more, are placed on the external vertical walls of the unit (9) and collaborate to hold the rigid blade (11) in position even in the case of an eventual total or partial breakdown of the nylon cord blades.
